Europäisches Patentamt

European Patent Office

Office européen des brevets

(11) Veröffentlichungsnummer: 0 298 513
A1

## (12) EUROPÄISCHE PATENTANMELDUNG

(21) Anmeldenummer: 88110972.2

(22) Anmeldetag: 08.07.88

(51) Int. Cl.⁴: G01N 33/48 , G01N 1/28 ,
B01L 3/14 , B01D 35/00

(30) Priorität: 08.07.87 DE 3722564

(43) Veröffentlichungstag der Anmeldung:
11.01.89 Patentblatt 89/02

(84) Benannte Vertragsstaaten:
ES GR

(71) Anmelder: Szabados, Andreas, Dr.med.
Otto-Heilmann-Strasse 2
D-8022 Grünwald(DE)

(72) Erfinder: Szabados, Andreas, Dr.med.
Otto-Heilmann-Strasse 2
D-8022 Grünwald(DE)

(74) Vertreter: Prechtel, Jörg et al
Patentanwälte H. Weickmann, Dr. K. Fincke
F.A. Weickmann, B. Huber Dr. H. Liska, Dr. J.
Prechtel Möhlstrasse 22 Postfach 860 820
D-8000 München 86(DE)

(54) Filtrationseinheit, insbesondere für medizinische Proben.

(57) Eine Filtrationseinheit weist ein Probenaufnahmegefäß (12), ein Filtratgefäß (14) und einen ggf. mit
dem Filtratgefäß einstückigen Filterkörper (16) auf,
wobei zur Filtrierung Probenaufnahmegefäß (12) und
Filterkörper (16) mit dem Filtratgefäß (14) verbindbar
sind. Das Filtratgefäß ist mit einer Verschlußmembran (30) versehen, in die eine am Filterkörper (16) vorgesehene Einstich-Kanüle (26) bei der
Herstellung der Verbindung zwischen Probenaufnahmegefäß (12) und Filtratgefäß (14) einsticht. Die Einstichstelle schließt sich nach dem Entfernen der
Einstich-Kanüle (26) wieder. Man erhält auf diese
Weise einen hermetischen Abschluß des Filtratraums (32).

# FIG.2

EP 0 298 513 A1

## Filtrationseinheit, insbesondere für medizinische Proben

Die Erfindung betrifft eine Filtrationseinheit, insbesondere für medizinische, mikrobiologische, biochemische, immunologische oder molekularbiologische Proben einschließlich radioaktivem Untersuchungsmaterial, mit einem Probenaufnahmegefäß, einem Filtratgefäß und einem zwischen Probenaufnahmegefäß und Filtratgefäß angeordneten, ein Filterelement aufweisenden Filterkörper, wobei zur Filtrierung Probenaufnahmegefäß und Filterkörper mit dem Filtratgefäß verbindbar sind.

Eine Filtrationseinheit dieser Art ist aus der DE-OS 34 27 114 bekannt. Die Filtrierung ist in einem vollständig abgeschlossenen System möglich, so daß die Kontaminationsgefahr (Spitzer, Lösungsmittel oder dergl.) beseitigt ist. Bei der bekannten Anordnung ist das Filtratgefäß zum Filterkörper hin offen. Nach dem Entfernen des Filterkörpers liegt daher das Filtrat momentan frei. Um eine Kontamination der Umgebung durch das Filtrat zu verhindern und/oder um störende Umgebungseinflüsse vom Filtrat abzuhalten (z.B. Zutritt von Luftsauerstoff), muß das Filtratgefäß sogleich nach dem Filtrieren und dem Abnehmen des Filterkörpers abgedeckt werden, beispielsweise durch Aufschrauben eines Deckels.

Die Aufgabe der Erfindung liegt darin, die Handhabung der Filtrationseinheit der eingangs genannten Art zu vereinfachen, insbesondere für einen selbsttätigen Abschluß des Filtrats nach außen hin nach Abnahme des Filterkörpers zu sorgen.

Diese Aufgabe wird dadurch gelöst, daß das Filtratgefäß mit einer Verschlußmembran versehen ist, und daß der Filterkörper mit einer Einstich-Kanüle versehen ist, welche bei Verbindung von Filterkörper und Filtratgefäß in die Verschlußmembran einsticht zur Herstellung einer Verbindung zwischen Probenaufnahmegefäß und Filtratgefäß, wobei die Einstichstelle bei Entfernen der Einstich-Kanüle sich im wesentlichen wieder schließt.

Um den beim Einströmen des Filtrats in das durch die Verschlußmembran abgeschlossene Filtratgefäß erforderlichen Druckausgleich herzustellen, könnte das Filtratgefäß mit zum Probenaufnahmegefäß hin öffnenden Entlüftungsdurchgängen versehen sein. Man erspart sich diese Maßnahme mit dem weiteren Vorteil einer wesentlichen Unterstützung des Filtrationsvorgangs, wenn man gemäß einer Weiterbildung der Erfindung den von der Verschlußmembran abgeschlossenen Filtratraum des Filtratgefäßes vor der Filtration unter Unterdruck setzt. Nach Aufsetzen des Filterkörpers samt Probenaufnahmegefäß mit eingefüllter Probe (Untersuchungsmaterial in gelöster, suspendierter oder dispergierter Form) erfolgt der Einstich der Kanüle in die Verschlußmembran, woraufhin das Filterelement filtratgefäßseitig ebenfalls unter Unterdruck gerät mit der Folge, daß die Probenflüssigkeit vom Atmosphärendruck durch das Filterelement gedrückt wird. Eine entsprechende Belüftung des Probenaufnahmegefäßes, insbesondere durch einen aufgesetzten Probenaufnahmegefäßdeckel, erleichtert diesen Vorgang.

Zusätzlich oder alternativ hierzu kann die Verschlußmembran kolbenartig innerhalb des Filtratgefäßes längs der Einstichkanüle zwischen einer ersten Endstellung mit minimalem Filtratraum-Volumen und einer zweiten Endstellung mit maximalem Filtratraum-Volumen bewegbar ausgebildet ist. Zu Beginn der Filtration befindet sich die Verschlußmembran in der ersten Endstellung. Während der Filtration wird die Membran vom Filtrat in die zweite Endstellung verschoben. Auf diese Weise kann ein Lufteinschluß im Filtratraum nach der Filtration vermieden werden. Das Filtrat im Filtratraum erleidet darum keine Luftsauerstoff-Oxydation. Im Falle der bevorzugten Kombination der kolbenartigen Anordnung der Verschlußmembran mit der Vakuum-Filtration schließt die Verschlußmembran in der ersten Endstellung ein minimales, von Null verschiedenes Filtratraum-Volumen unter Vakuum ein. Zur Bewegung der Verschlußmembran aus der ersten Endstellung in der zweiten Endstellung muß das Filtrat einen entsprechend hohen Druck auf den jeweiligen Filtratraum ausüben. Da die auf das Filtrat wirkende Schwerkraft hierzu in der Regel nicht ausreichen wird, muß das Filtrat dementsprechend unter Druck gesetzt werden, sei es beispielsweise mit Hilfe eines in das Probenaufnahmegefäß eingesetzten Druck-Kolbens, sei es durch Einsetzen der Filtrationseinheit in eine Ultra-Zentrifuge.

Um zuverlässige Abdichtung zwischen Membran und Filtratgefäß einerseits und leichtgängige Verschiebbarkeit der Membran andererseits zu gewährleisten, wird vorgeschlagen, daß die Verschlußmembran an einem innerhalb des Filtratgefäßes bewegbaren Kolben angebracht ist.

Für viele Untersuchungen des Filtrats ist eine möglichst genaue Einhaltung eines vorgegebenen Filtrat-Volumens von Bedeutung. Um sie nach der Filtration das Umschütten des Filtrats in einen Meß-Becher zu ersparen, wird vorgeschlagen, daß das Filtratgefäß mit einem Bewegungsanschlag für die zweite Endstellung der Membran bzw. des Kolbens versehen ist.

Gemäß der angegebenen DE-OS 34 27 114 kann der Filterkörper von einem gesonderten Teil gebildet sein, in welches von der einen Seite das Probenaufnahmegefäß und von der anderen Seite das Filtratgefäß einsetzbar, insbesondere einschraubbar ist. Man erspart sich das gesonderte Teil, wenn, in Weiterbildung der Erfindung, der Filterkörper mit dem Probenaufnahmegefäß einstückig ausgebildet ist. Hierbei kann der Filterkörper eine Stirnwand aufweisen, die eine Bodenwand des Probenaufnahmegefäßes bildet und von der die Einstich-Kanüle ausgeht. Der Stirnwand kann das scheibenförmige Filterelement gegenüberliegen.

Um eine sichere Zentrierung in der Einstich-Kanüle beim Einsetzen, insbesondere Aufschrauben des Filterkörpers auf das Filtratgefäß, sicherzustellen, wird vorgeschlagen, daß das Filtratgefäß im Bereich seines dem Filterkörper nächstgelegenen Endes mit einer Führungs Öffnung für die Einstich-Kanüle versehen ist.

Um nach der Filtration die Handhabung des Filterkörpers, insbesondere zur Untersuchung der abgefilterten Teilchen, auf dem Filterelement bequem handhaben zu können, insbesondere ohne Verletzungsgefahr an der Einstich-Kanüle, wird vorgeschlagen, daß die Einstich-Kanüle mit einer Sollbruchstelle versehen ist. Hierzu kann auch vorgesehen sein, daß das Filterelement filterkörperseitig mit einer Kappe oder Deckel verschließbar ausgebildet ist.

Insbesondere als Transportschutz des Filtrats vor Umgebungseinflüßen bzw. umgekehrt der Umgebung vor dem Filtrat kann auch das Filtratgefäß filterelementseitig mit einer Kappe oder Deckel verschließbar ausgebildet sein.

Bevorzugt ist die Membran eine Silikonmembran. Diese gewährleistet auch nach mehreren Einstichen einen luftdichten Abschluß des Filtrats. Der Sauerstoff-Ausschluß schützt vor ungewollten Redox-Reaktionen, die u.a. eine Aktivitätsabnahme oder einen Wirkungsverlust des Filtrats nach sich ziehen können. Auch ist eine Kontamination der Umwelt durch das Filtrat, z.B. bei unbeabsichtigtem Öffnen des Filtergefäß-Deckels ausgeschlossen. Die Entnahme von Filtratflüssigkeit, auch ggf. die mehrfache Entnahme kleinerer Filtrat-Volumina ist auf sterile, umweltsichere Weise möglich mit Hilfe beispielsweise einer sterilen Einmal-Spritze. Nach dem Einstich der Spritzenkanüle und dem Absaugen eines Probenvolumens mit anschließendem Herausziehen der Spritzenkanüle schließt sich die Membran wieder automatisch.

Bevorzugte Anwendungsgebiete für die erfindungsgemäße Filtrationseinheit sind neben medizinischen Proben, wie z.B. Proben auf dem Gebiete der Mikrobiologie (z.B. Bebrütung von Anaerobiern unter Sauerstoff-Ausschluß) Tests und Analysen auf dem Gebiete der Gentechnik und der Molekularbiologie, Immunologie und Biochemie einschließlich radioaktiver Untersuchungsmethoden.

Die Erfindung wird im folgenden an bevorzugten Ausführungsbeispielen anhand der Zeichnung erläutert.

Es zeigt:

Fig. 1 eine vereinfachte Seitenansicht einer erfindungsgemäßen Filtrationseinheit vor dem Zusammenschrauben von Probenaufnahmegefäß und Filtratgefäß;

Fig. 2 die Anordnung gemäß Fig. 1 nach dem Zusammenschrauben in geschnittener Seitenansicht;

Fig. 3 eine geschnittene Seitenansicht entsprechend Fig. 2 einer abgewandelten Filtrationseinheit zu Beginn der Filtration; und

Fig. 4 die Anordnung gemäß Fig. 3 nach der Filtration.

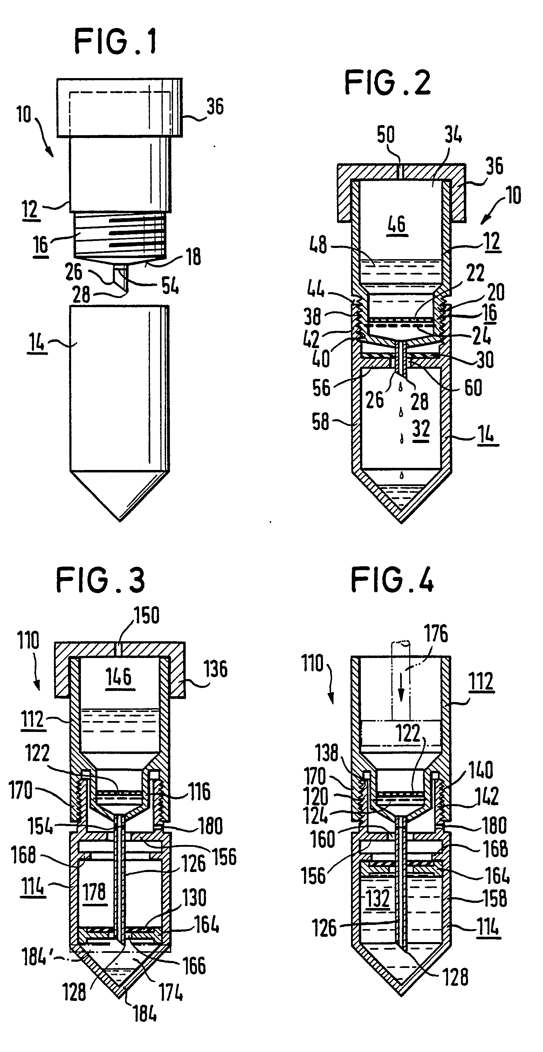

Die Filtrationseinheit 10 gemäß Fig. 1 und 2 besteht aus einem Probenaufnahmegefäß 12 und einem Filtratgefäß 14. Mit dem Filtratgefäß ist einstückig ein Filterträger verbunden, welcher im folgenden Filterkörper 16 genannt wird, um auf die Möglichkeit hinzuweisen, daß auch ein gesonderter Filterkörper entsprechend dem Filterkorper 16 entsprechend den Fig. 3 und 4 bzw. ein Filterkörper 216 entsprechend den Fig. 6 bis 8 der DE-OS 34 27 114 eingesetzt werden könnte. In letzterem Falle würde der Filterkörper auf die Gefäßöffnung des Probenaufnahmegefäßes aufgesetzt werden. Wird dann der Filterkörper samt Probenaufnahmegefäß auf die Gefäßöffnung des Filtratgefäßes aufgeschraubt, ergibt sich die gewünschte geschlossene Filtrationseinheit.

Der in den Fig. 1 und 2 dargestellte Filterkörper weist einen zylinderringförmigen Abschnitt 20 auf, welcher eine den Innenquerschnitt überdeckende Filterscheibe 22 trägt. Die Filterscheibe 22 kann entweder starr mit dem Abschnitt 20 verbunden sein oder auf ein in Fig. 2 strichliert angedeutetes, mit dem Abschnitt 22 starr verbundenes Stützsieb 24 gelegt sein, was das Entfernen der Filterscheibe 22 nach der Filtration zur näheren Untersuchung der abfiltrierten Teilchen ermöglicht. Auch eine drei- oder mehrschichtige Ausbildung gemäß den Fig. 6 bis 8 der DE-OS 34 27 114 ist möglich.

In der dargestellten Ausführungsform gemäß Fig. 1 und 2 geht der Abschnitt 20 in eine Bodenwand 18 des Probenaufnahmegefäßes über. Bei gesonderter Ausbildung von Filterkörper und Probenaufnahmegefäß würde der Filterkörper eine dieser Bodenwand entsprechende Stirnwand aufweisen. In beiden Fällen geht von der Bodenwand 18 bzw. der Stirnwand des Filterkörpers eine Einstich-Kanüle 26 aus, die in Achsrichtung des zylindrischen Probenaufnahmegefäßes verläuft und an der Bodenwand-Außenseite (in der Anordnung gemäß Fig. 1 und 2 nach unten) absteht. Die Einstich-Kanüle 26 ist mit einer durch Abschrägung angespitzten Kanülenspitze 28 versehen, um den Einstich in eine in Fig. 2 erkennbare Verschlußmembran 30 des Filtratgefäßes 14 zu erleichtern.

Die Verschlußmembran 30 (vorzugsweise aus Silikon-Gummi) verschließt einen Filtratraum 32 des Filtratgefäßes 14. Es besteht daher die Möglichkeit, den Filtratraum 32 vor der Filtration, am besten bereits bei der Herstellung des Filtratgefäßes 14, unter Unterdruck zu setzen. Die Filtration läßt sich auf diese Weise beschleunigt durchführen.

Vor dem Zusammensetzen von Filtratgefäß 14 und Probenaufnahmegefäß 12 ist letzteres mit der abzufiltrierenden Probe zu versehen. Anschließend kann, um die Filtrationseinheit nach außen hin abzuschließen, auf die in den Fig. 1 und 2 oben angeordnete Gefäßöffnung 34 des Probenaufnahmegefäßes 12 ein Deckel oder eine Kappe 36 aufgesteckt werden, beispielsweise aufgeschraubt (entsprechende Schraubgewinde sind in Fig. 2 nicht dargestellt). Als nächstes wird das Probenaufnahmegefäß 12 auf das Filtratgefäß 14 aufgesetzt und im dargestellten Ausführungsbeispiel mit dem Filtratgefäß 14 verschraubt (Außengewinde 38 am Abschnitt 20 und entsprechendes Innengewinde 40 eines Probenrandabschnitts 42 des Filtratgefäßes 14 zwischen der oberen Endstirnfläche 44 des Filtratgefäßes 14 und der Membran 30). Gemäß den Fig. 3 und 4 können Außen- und Innengewinde auch vertauscht sein.

Zu Beginn des Einschraub-Vorgangs hat die Spitze 28 der Einstich-Kanüle noch Abstand zur Membran 30, bis im weiteren Verlauf die Spitze 28 in die Membran 30 eindringt und schließlich eine Verbindung zwischen dem Vakuum im Filtratraum 32 und dem Probenaufnahmegefäß-Innenraum 46 herstellt. In der Folge wird die Probenflüssigkeit 48 im Raum 46 des Probenaufnahmegefäßes 12 vom Atmosphärendruck durch die Filterscheibe 22 hindurch über die Einstich-Kanüle 26 in den Filtratraum 32 gedrückt. Eine hierzu erforderliche Belüftung des Raums 46 erfolgt über eine entsprechende Belüftungsöffnung (in Fig. 2 im Deckel 36 angedeutet und mit 50 bezeichnet).

Nach erfolgter Filtration wird das Probenaufnahmegefäß wieder vom Filtratgefäß 14 durch Abschrauben entfernt. Sobald hierbei die Einstich-Kanüle 26 aus der Membran 30 herausgezogen ist, schließt sich augenblicklich selbsttätig die Einstichstelle in der Membran 30. Es kann also in der Folge keine Umgebungsluft, insbesondere Luftsauerstoff, zur Filtratflüssigkeit gelangen, so daß ungewollte Redox-Reaktionen vermieden werden. Umgekehrt wird auch eine Kontamination in der Umwelt bei der Lagerung bzw. bei Transport zuverlässig verhindert, da weder Filtratflüssigkeit noch unter Umständen in der Filtratflüssigkeit gelöste Gase aus dem Filtratraum 32 entweichen. Als zusätzlichen Transportschutz kann auf das Filtratgefäß 14 eine Kappe oder ein Deckel aufgesetzt werden.

Die Verwendung der Membran 30 bringt den weiteren Vorteil mit sich, daß der Inhalt bzw. Teilvolumina der Filtratflüssigkeit ggf. wiederholt mit Hilfe von Spritzen oder dergl. mit Einstich-Kanülen entnommen werden können. Die jeweilige Entnahme erfolgt unter sterilen und kontaminationsfreien Bedingungen.

Um die weitere Verarbeitung des Probenaufnahmegefäßes 12, insbesondere zur Entsorgung bzw. zur Untersuchung der abfiltrierten Teilchen zu erleichtern, kann, in nicht dargestellter Weise, auf das untere Ende des Probenaufnahmegefäßes 12 eine Kappe oder ein Deckel aufgesetzt werden. Falls hierbei die Einstich-Kanüle 26 stört, kann diese teilweise abgebrochen werden, wozu sie im Bereich unmittelbar anschließend an die Bodenwand 18 mit einer Sollbruchstelle 54 versehen sein kann.

Die in den Fig. 3 und 4 dargestellte zweite Ausführungsform einer erfindungsgemäßen Filtrationseinheit ist mit 110 bezeichnet. Dementsprechend sind Elemente dieser Ausführungsform, die solchen der ersten Ausführungsform 10 gemäß Fig. 1 und 2 entsprechen, mit denselben Bezugsziffern, jeweils vermehrt um die Zahl 100, versehen.

Die Filtrationseinheit 110 besteht wiederum aus einem Filtratgefäß 114 und einem Probenaufnahmegefäß 112 in einstückiger Ausbildung mit dem Filterkörper 116. Die zweite Ausführungsform ist vor allem für diejenigen Verwendungsarten vorgesehen, bei welchen es auf möglichst geringen Umgebungsluft-Einschluß nach der Filtration im Filtratraum ankommt. Bei der Lösung gemäß Fig. 1 und 2 mit Vakuum im Filtratraum 32 ist gleichermaßen für Einschlußfreiheit gesorgt. Größere Filtratraum-Volumina sind bei der ersten Ausführungsform zumindest bei Verwendung von Kunststoff-Filtratgefäßen nicht realisierbar aufgrund nicht ausreichender mechanischer Stabilität gegenüber dem Atmosphärendruck.

Um diesen Lufteinschluß bei der filtration zu vermeiden, ist die Membran 130 kolbenartig innerhalb des Filtratgefäßes 114 in axialer Richtung bewegbar und zwar zwischen der in Fig. 3 dargestellten ersten Endstellung mit minimalem Filtratraum-Volumen und der zweiten Endstellung gemäß Fig. 4 mit maximalem Filtratraum-Volumen. Um bei relativ dünner Membran 130 eine reibungsarme und dennoch ausreichend gut abgedichtete Membranbewegung sicherzustellen, ist die Membran 130 an einem Kolben 164 angeordnet. Eine zentrale Durchgangsöffnung 166 des Kolbens 164 erlaubt den Durchtritt der Spitze 128 anschließend an den Durchstich durch die auf dem Kolben 164 aufliegende Membran 130. Wie die Fig. 3 und 4 zeigen, ist die Einstich-Kanüle 126 derart nach unten hin verlängert, daß bereits in der ersten Endstellung von Kolben und Membran gemäß Fig. 3 die Membraneinheit 130 von der Spitze 128 der Kanüle 126 bei aufgeschraubtem Probenaufnahmegefäß 112 durchstochen wird.

In der oberen Endstellung gemäß Fig. 4 schlägt der Kolben 164 an einen Anschlag des Filtratgefäßes 114 in Form eines radial nach innen vorspringenden Umfangsbundes 168 an der Umfangswand 158 des Filtratgehäuses 114 an. In geringem Abstand nach oben hin schließt sich eine der Wand 56 in Fig. 2 entsprechende Wand 156 an, deren zentrale Durchgangsöffnung 160 zur Führung der Einstich-Kanüle 126 beim Aufsetzen des Probenaufnahmegefäßes 112 dient. Der sich nach oben hin anschließende Randabschnitt 142 ist, abweichend zur ersten Ausführungsform, mit einem Außengewinde 140 versehen. Auf dieses Außengewinde wird ein ein entsprechendes Innengewinde 138 aufweisender axial vorspringender Hals 170 im Bereich des unteren Endes des Probenaufnahmegefäßes 112 aufgeschraubt.

Die Filtration mit Hilfe der Filtrationseinheit 110 geht derart vonstatten, daß man wiederum als erstes das Probenaufnahmegefäß 112 mit der abzufiltrierenden Flüssigkeit füllt und dann auf das Filtratgefäß 114 mit der Spitze 128 der Einstich-Kanüle 126 voraus aufschraubt. Vorher, am besten bereits bei der Produktion des Filtratgefäßes 114, wurde der unterhalb des Kolbens 164 in der in Fig. 3 dargestellten unteren Endstellung befindliche Teilraum 174 evakuiert. Sticht nun im Verlauf des Zusammenschraubens von Filtratgefäß 114 und Probenaufnahmegefäß 112 die Einstich-Kanüle 126 durch die Membran 130 hindurch, so erfolgt atmosphärenunterstützt die Filtration bis der Teilraum 174 mit Filtrat angefüllt ist. Anschließend wird Filtratflüßigkeit durch die Einstich - Kanüle 126 hindurch in den Raum unterhalb des Kolbens 164 gedrückt mit der Folge, daß der Kolben 164 nach oben bewegt wird, bis er schließlich die obere Endstellung gemäß Fig. 4 erreicht hat. Die auf die Probenflüssigkeit im Probenaufnahmegefäß 112 wirkende Schwerkraft wird hierzu im allgemeinen nicht ausreichen. Wird die Filtrationseinheit jedoch in eine Ultra-Zentrifuge eingesetzt, so genügen die enstehenden Zentrifugalkräfte ohne weiteres, um die Membran vom Filtrat in die obere Endstellung gemäß Fig. 4 verschieben zu lassen.

Alternativ hierzu kann die Filtration auch beispielsweise durch einen in Fig. 4 mit einer Strich-Punkt-Punkt-Linie angedeuteten, in das Probenaufnahmegefäß 112 einsetzbaren Stempel 176, unterstützt werden.

In beiden Fällen muß der Raum 178 innerhalb des Filtratgefäßes 114 oberhalb der Membran 130 mit der Atmosphäre verbunden sein, was durch eine Bohrung 180 im Abschnitt 142 des Filtratgefäßes 114 angedeutet ist. Bei der Filtration mit Hilfe der Anordnung in Fig. 3 mit oberem Abschluß des Probenaufnahmegefäßes 112 durch eine Kappe 136 muß wiederum eine Belüftung des Innenraums 146 des Probenaufnahmegefäßes 112, beispielsweise in Form einer Bohrung 150, im Deckel 136 vorgesehen sein.

Auch bei der zweiten Ausführungsform 110 gemäß Fig. 3 und 4 schließt sich die Membran 130 nach dem Entfernen der Kanüle 126 wieder. Ein Zutritt von Luftsauerstoff zum Lufteinschluß-freien Filtrat im Filtratgefäß 114 wird dadurch ausgeschlossen, ebenso wie das Austreten von Filtratflüssigkeit. Eine Filtratflüssigkeit-Entnahme kann wiederum mit Hilfe von Einmal-Spritzen oder dergl. erfolgen.

Bei denjenigen Anwendungsfällen, bei welchen eine geringfügige Lufteinschlußmenge hingenommen werden kann, besteht die Möglichkeit des Einsatzes einer Filtrationseinheit ohne Vakuum im Filtratgefäß vor der Filtration. Um die eingeschlossene Luftmenge möglichst gering zu halten, lassen die in diesem Falle die Bodenwand 184 des Filtratgefäßes 114 nicht die Form einer Kreiskegelspitze nach unten zu (zur Bildung des Vakuumraums 174), sondern erstreckt sich als in Fig. 3 mit einer Strich-Punkt-Linie angedeutete Bodenwand $184'$ hin zur Filtratgehäuseachse radialer Richtung. In der unteren Endstellung des Kolbens 164 liegt dieser im wesentlichen vollflächig an der Wand $184'$ an, so daß das nach der Filtration eingeschlossene Luftvolumen minimal ist.

Die Filterscheiben 22,122 können ein- oder mehrschichtig sein, ihre Oberflächen können z.B. durch Faltung oder Prägung 3-dimensional vergrößert sein, um hierdurch die wirksame Oberfläche und in der Folge die Filtrier-Effektivität zu erhöhen.

## Ansprüche

1. Filtrationseinheit (10;110), insbesondere für medizinische, mikrobiologische, biochemische, immunologische oder molekularbiologische Proben einschließlich radioaktivem Untersuchungsmaterial, mit einem Probenaufnahmegefäß (12;112), einem Filtratgefäß (14;114) und einem zwischen Probenaufnahmegefäß (12;112) und Filtratgefäß (14;114) angeordneten, ein Filterelement (22) aufweisenden Filterkörper (16;116), wobei zur Filtrierung Probenaufnahmegefäß (12;112) und Filterkörper (16;116) mit dem Filtratgefäß (14;114) verbindbar sind, dadurch **gekennzeichnet,** daß das Filtratgefäß (14; 114) mit einer Verschlußmembran (30; 130) versehen ist, und daß der Filterkörper (16; 116) mit einer Einstich-Kanüle (26; 126) versehen ist, welche bei Verbindung von Filterkörper (16i 116) und Filtratgefäß (14i 114) in die Verschlußmembran (30; 130) einsticht zur Herstellung einer Verbindung zwischen Probenaufnahmegefäß (12: 112) und Filtratgefäß (14; 114), wobei die Einstichstelle bei Entfernen der Einstich-Kanüle (26; 126) sich im wesentlichen wieder schließt.

2. Filtrationseinheit nach Anspruch 1, dadurch **gekennzeichnet,** daß der von der Verschlußmembran abgeschlossene Filtratraum (32; 174) des Filtratgefäßes (14; 114) vor der Filtration unter Unterdruck setzbar ist.

3. Filtrationseinheit nach Anspruch 1 oder 2, dadurch **gekennzeichnet,** daß die Verschlußmembran (130) kolbenartig innerhalb des Filtratgefäßes (114) längs der Einstich-Kanüle (126) zwischen einer ersten Endstellung (Fig. 3) mit minimalem Filtratraum-Volumen und einer zweiten Endstellung (Fig. 4) mit maximalem Filtratraum-Volumen bewegbar ist.

4. Filtrationseinheit nach Anspruch 3, dadurch **gekennzeichnet,** daß die Verschlußmembran (130) an einem innerhalb des Filtratgefäßes (114) bewegbaren Kolben (164) angebracht ist.

5. Filtrationseinheit nach Anspruch 3 oder 4, dadurch **gekennzeichnet,** daß das Filtratgefäß (114) mit einem Bewegungsanschlag (168) für die zweite Endstellung der Verschlußmembran (130) bzw. für den Kolben (164) versehen ist.

6. Filtrationseinheit nach einem der vorherigen Ansprüche, dadurch **gekennzeichnet,** daß der Filterkörper (20, 120) mit dem Probenaufnahmegefäß (12; 112) einstückig ausgebildet ist.

7. Filtrationseinheit nach Anspruch 6, dadurch **gekennzeichnet,** daß der Filterkörper (20; 120) eine Stirnwand aufweist, die eine Bodenwand (18) des Probenaufnahmegefäßes (12;112) bildet, und von der die Einstich-Kanüle (26; 126) ausgeht.

8. Filtrationseinheit nach Anspruch 7, dadurch **gekennzeichnet,** daß der Stirnwand das scheibenförmige Filterelement (22; 122) gegenüberliegt.

9. Filtrationseinheit nach einem der vorherigen Ansprüche, dadurch **gekennzeichnet,** daß das Filtratgefäß (14; 114) im Bereich seines dem Filterkörper (16; 116) nächstgelegenen Endes mit einer Führungs-Öffnung (60; 160) für die Einstich-Kanüle (26; 126) versehen ist.

10. Filtrationseinheit nach einem der vorherigen Ansprüche, dadurch **gekennzeichnet,** daß die Einstich-Kanüle (26; 126) mit einer Sollbruchstelle (54; 154) versehen ist.

11. Filtrationseinheit nach einem der vorherigen Ansprüche, dadurch **gekennzeichnet,** daß das Filterelement (16; 116) filtratgefäßseitig mit einer Kappe oder Deckel verschließbar ausgebildet ist.

12. Filtrationseinheit nach einem der vorherigen Ansprüche, dadurch **gekennzeichnet,** daß das Filtratgefäß (14: 114) filterkörperseitig mit einer Kappe oder einem Deckei verschließbar ausgebildet ist.

13. Filtrationseinheit nach einem der vorherigen Ansprüche, dadurch **gekennzeichnet,** daß die Verschlußmembran (30; 130) eine Silikonmembran ist.

14. Filtrationseinheit nach einem der vorherigen Ansprüche, dadurch **gekennzeichnet,** daß das Filterelement mehrschichtig ausgebildet ist.

15. Filtrationseinheit nach einem der vorherigen Ansprüche, dadurch **gekennzeichnet,** daß das Filterelement mit einer vorzugsweise durch Faltung oder Prägung 3-dimensional vergrößerten Oberfläche ausgebildet ist.

16. Filtrationseinheit (10;110), insbesondere für medizinische, mikrobiologische, biochemische, immunologische oder molekularbiologische Proben einschließlich radioaktivem Untersuchungsmaterial. mit einem Probenaufnahmegefäß (12;112), einem Filtratgefäß (14;114) und einem zwischen Probenaufnahmegefäß (12;112) und Filtratgefäß (14;114) angeordneten, ein scheibenförmiges Filterelement (22) aufweisenden Filterkörper (16;116), wobei zur Filtrierung mittels des Filterelements (22) Probenaufnahmegefäß (12;112) und Filterkörper (16;116) mit dem Filtratgefäß (14;114) verbindbar sind, **dadurch gekennzeichnet,** daß das Filtratgefäß (14;114) mit einer Verschlußmembran (30;130) versehen ist. und daß der Filterkörper (16;116) an der dem Filtratgefäß (14;114) zugewandten Seite des Filterelements (22) mit einer Stirnwand ausgebildet ist, von der eine Einstichkanüle (26; 126) ausgeht und welche bei Verbindung von Filterkörper (16;116) und Filtratgefäß (14; 114) in die Verschlußmembran (30;130) einsticht zur Herstellung einer Verbindung zwischen Probenaufnahmegefäß (12;112) und dem von der Verschlußmembran abgeschlossenen, vor der Filtration unter Unterdruck setzbaren, Filtratraum (32;174) des Filtratgefäßes (14;114), wobei die Einstichstelle bei Entfernen der Einstich-Kanüle (26; 126) sich im wesentlichen wieder schließt.

# FIG.1

# FIG.2

# FIG.3

# FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 731 806 (J.B. McCORMICK) <br> * Figuren 5,7; Spalte 1, Zeile 66 - Spalte 2, Zeile 11 * <br> --- | 1,2,6-8 ,16 | G 01 N 33/48 <br> G 01 N 1/28 <br> B 01 L 3/14 <br> B 01 D 35/00 |
| A | US-A-3 850 174 (W.A. AYRES) <br> * Zusammenfassung; Figuren 7,8 * <br> --- | 3,4 | |
| A | US-A-4 014 797 (K. RAINES et al.) <br> * Zusammenfassung; Spalte 2, Zeilen 40-47; Figuren 2,7,8 * <br> --- | 15 | |
| A,D | DE-A-3 427 114 (SZABADOS) <br> * Seite 25, Zeilen 6-25 * <br> ----- | 14 | |

RECHERCHIERTE SACHGEBIETE (Int. Cl.4)

B 01 L
G 01 N
B 01 D
A 61 B

Der vorliegende Recherchenbericht wurde für alle Patentansprüche erstellt

| Recherchenort | Abschlußdatum der Recherche | Prüfer |
|---|---|---|
| DEN HAAG | 28-09-1988 | HODSON C.M.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument